# EUROPÄISCHE PATENTSCHRIFT

(11) **EP 1 486 279 B1**
(45) Veröffentlichungstag und Bekanntmachung des Hinweises auf die Patenterteilung: **22.06.2011**
(21) Anmeldenummer: 04012080.0
(22) Anmeldetag: 21.05.2004
(51) Int. Cl.: B23B 27/16, B23C 5/08

(54) **Schneideinsatz zum Drehen und Fräsen**
Cutting insert for turning and milling
Plaquette de coupe pour tourner et fraiser

(30) Priorität: 11.06.2003 DE 10326662
(43) Veröffentlichungstag der Anmeldung: 15.12.2004
(73) Patentinhaber: Sandvik Intellectual Property AB, 811 81 Sandviken (SE)
(72) Erfinder: Wermeister, Günter, 40667 Meerbusch (DE)
(74) Vertreter: Weber, Roland

(56) Entgegenhaltungen:
- US-B1- 6 238 146
- PATENT ABSTRACTS OF JAPAN Bd. 1996, Nr. 01, 31. Januar 1996 (1996-01-31) & JP 7 237027 A (MITSUBISHI MATERIALS CORP), 12. September 1995 (1995-09-12)

## Beschreibung

Die vorliegende Erfindung betrifft einen Schneideinsatz in Form eines Polyeders mit mindestens zwei im wesentlichen parallelen Hauptflächen mit jeweils polygonalem Umriß und mit mehreren Seitenflächen, welche die parallelen Hauptflächen miteinander verbinden, wobei am Übergang mindestens eines Teils der Seitenflächen zu mindestens einer der Hauptflächen Schneidkanten ausgebildet sind,wobei:
a) ein Teil der Seitenflächen Spanflächen bildet,
b) der mit der Spanfläche eine Schneidkante bildende Teil der Hauptfläche eine Freifläche bildet
c) ein Teil der Seitenflächen und ein Teil der Hauptfläche Anlageflächen bilden,

Ein Schneideinsatz mit den vorstehenden Merkmalen ist beispielsweise aus der US 6,238,146 B1 bekannt. Schneideinsätze dieser Art sind typischerweise aus Hartmetall gefertigt und werden aus pulverisiertem Material zunächst gepresst und dann gesintert und dann gegebenenfalls auch zur Erzielung ihrer endgültigen Form nachbearbeitet. Derartige Schneideinsätze zeichnen sich durch eine besondere Härte und Widerstandsfähigkeit aus, haben jedoch andererseits auch eine geringere Bruchfestigkeit als Werkzeugstahl und sind deshalb zur Erzielung einer ausreichenden Stabilität hinsichtlich ihrer geometrischen Ausgestaltung eingeschränkt. Der Einbau von Schneideinsätzen in Schneidwerkzeuge erfordert entsprechende Aufnahmen und Halterungen an den Schneidwerkzeugen, die einen gewissen Platzbedarf haben, so daß die Werkzeuge entsprechende Abmessungen und Ausgestaltungen aufweisen müssen, um insbesondere bei auswechselbaren Schneideinsätzen ausreichend Platz für einen oder mehrere Schneideinsätze sowie für deren Befestigungselemente zu bieten.

Wegen ihrer außerordentlichen Härte und der im Laufe der Zeit immer weiter verbesserten Qualität (Maßhaltigkeit und ausreichende Bruchfestigkeit) derartiger Schneideinsätze haben diese sich inzwischen für weite Bereiche der Metallbearbeitung als die wesentlichen Schneidelemente durchgesetzt, sind jedoch nach wie vor sowohl in der Herstellung als auch in der praktischen Anwendung, d.h. einem regelmäßig mit Stillstand verbundenen Austausch, relativ teuer.

Aus diesem Grund sind in der Vergangenheit Schneideinsätze entwickelt worden, welche mehrere unabhängige Schneidkanten aufweisen, von denen im Gebrauch eines Werkzeuges jeweils nur eine oder ein Teil mit dem Werkstück in Eingriff kommt, während nach dem Verschleiß einer Schneidkante der Schneideinsatz in dem Werkzeug gedreht oder gewendet werden kann, um anschließend mit einer neuen, unverschlissenen Schneidkante mit dem Werkstück in Eingriff zu treten. Es versteht sich, daß ein gegebener Schneideinsatz umso wirtschaftlicher ist, je mehr nutzbare Schneidkanten er aufweist.

Wesentlich für die Haltbarkeit von Schneideinsätzen und die Leistungsfähigkeit von Schneidwerkzeugen ist aber auch die konkrete Einbaulage und Halterung der Schneideinsätze an Anschlagflächen, die eine möglichst großflächige Unterstützung für den Schneideinsatz bieten sollen, ohne dabei die nicht aktiven Schneidkantenabschnitte zu beschädigen und mit einer geometrischen Anordnung, welche die an der aktiven Schneidkante auftretenden Schneidkräfte im wesentlichen in Form von Druckkräften auf das Werkzeug übertragen, und möglichst nicht in Form von Biegekräften auf den Schneideinsatz wirken sollen.

Bei Werkzeugen, die mit mehreren Schneideinsätzen auszustatten sind, wie z.B. bei Fräswerkzeugen, spielt außerdem die konkrete Geometrie und Einbaulage der Schneideinsätze insofern eine wesentliche Rolle, als diese leicht und einfach montierbar sein sollen und dennoch zur Erzielung einer hohen Leistungsfähigkeit und zur Reduzierung des Verschleißes und der Stillstandszeiten eine möglichst große Anzahl von Schneideinsätzen mit einem entsprechend engen Abstand zwischen benachbarten Schneideinsätzen an einem solchen Werkzeug untergebracht werden soll.

Dabei erfordern in der Praxis viele konkrete Bearbeitungen von Werkstücken nur die Herstellung relativ feiner Strukturen geringer Tiefe bzw. die Entfernung eines nur geringen Aufmaßes auf einem konkreten Werkstück. Beispielsweise sind für Kraftfahrzeugmotoren inzwischen Nockenwellen entwickelt worden, deren zentraler Wellenabschnitt aus einem relativ dünnwandigen Rohr besteht, auf welches die Nocken aufgebracht werden. Zum sicheren Befestigen der Nocken auf dem Rohr müssen relativ flache Nuten in die Außenwand des Rohres eingebracht werden. Dies kann beispielsweise, ähnlich wie bei der herkömmlichen Herstellung von Nockenwellen, mit Hilfe von Scheibenfräsem geschehen, die an ihrem äußeren Umfang mit entsprechenden Schneideinsätzen zur Herstellung derartiger Nuten bestückt sind.

Die vorliegende Erfindung ist insbesondere für derartige Anwendungsfälle geeignet. Herkömmlich wurden entsprechende Nuten mit sogenannten Stechplatten hergestellt, die im allgemeinen nur eine einzige oder zwei Schneidkanten aufweisen. Derartige Stechplatten sind schwer zu montieren und müssen wegen ihrer geringen Schneidkantenzahl häufig gegen neue Stechplatten ausgetauscht werden. Der aus der oben genannten US 6,238,146 B1 bekannte Schneideinsatz ist nicht für duie Herstellung entsprechend feiner Nuten vorgesehen, da sich die Schneidkante jeweils über die gesamte Längskante einer Seitenfläche erstreckt.

Gegenüber diesem Stand der Technik liegt der vorliegenden Erfindung die Aufgabe zugrunde, einen Schneideinsatz und entsprechende Schneidwerkzeuge zu schaffen, die sich für die Herstellung von Strukturen geringer Tiefe als besonders günstig erweisen.

Hinsichtlich des Schneideinsatzes wird diese Aufgabe dadurch gelöst, daß die Schneidkanten ein vorgebbares Profil haben, das durch eine Strukturierung der betreffenden Hauptfläche in der Nähe der Schneidkante gebildet wird, indem die Hauptfläche im Bereich einer Schneidkante zwei im wesentlichen symmetrisch angeordnete Abflachungen aufweist, zwischen denen eine zentrale Erhebung verbleibt, deren Oberfläche eine Freifläche bildet und mit dem zentralen Abschnitt in einer gemeinsamen Ebene liegt.

Entsprechend der Lage der Freiflächen und Spanflächen handelt es sich demnach um Schneideinsätze, die für eine sogenannte tangentiale Einbaulage vorgesehen sind, was bedeutet, daß die als Freifläche dienende Hauptfläche des Schneideinsatzes, abgesehen von dem erforderlichen Freiwinkel, in etwa tangential zu der Werkstückoberfläche verläuft, wenn der betreffende Schneideinsatz mit dem Werkstück in Eingriff ist. Dabei weist die Hauptfläche mindestens im Bereich der Schneidkanten Einsenkungen bzw. Abflachungen und/oder Erhebungen auf, die durch die Schnitt mit der Spanfläche bzw. mit den Spanflächen ein Schneidkantenprofil definieren

Da die Hauptflächen einen polygonalen Umriß haben und die umlaufende Seitenwand dementsprechend aus einer Vielzahl von Seitenflächen besteht, kann entsprechend der Anzahl der Seitenflächen ein gewisser Anteil derselben, vorzugsweise genau die Hälfte, als Spanfläche ausgebildet sein, während die andere Hälfte jeweils als Anlagefläche ausgebildet ist. Vorzugsweise hat der den Umriß einer Hauptfläche definierende Polygonzug mindestens sechs Ecken und vorzugsweise acht oder mehr Ecken, so daß die umlaufende Seitenwand in entsprechend viele Seitenflächen zerfällt und beispielsweise mindestens drei, vorzugsweise mindestens vier dieser Seitenflächen als Spanflächen ausgebildet sind, während die verbleibenden drei oder vier Seitenflächen (oder auch mehr) als Anlageflächen ausgebildet sind. Vorzugsweise sind Anlageflächen und Spanflächen entlang des Umfangs eines solchen Schneideinsatzes im Wechsel angeordnet und jeweils zueinander abgewinkelt, wobei sich die relative Abwinklung bei einer im wesentlichen symmetrischen Ausbildung des Polygons als n-ter Teil von 360° ergibt, wenn entlang des Umfangs insgesamt n Teilflächen vorgesehen sind.

In der bevorzugten Ausführungsform der Erfindung sind die seitlichen Anlageflächen von den Spanflächen eindeutig getrennt und diese Trennung erfolgt am besten dadurch, daß die Anlageflächen gegenüber den Spanflächen abgewinkelt ausgebildet sind. Grundsätzlich wäre es auch denkbar, Verlängerungen der Spanflächen als Anlageflächen zu verwenden oder aber zwischen Spanflächen und Anlageflächen deutlich abgerundete Übergänge vorzusehen oder auch einen Teil dieser Flächen als, in der Draufsicht auf die Hauptfläche, gekrümmt bzw. abgerundet verlaufende Flächen auszubilden. Insbesondere die Anlageflächen werden jedoch vorzugsweise als ebene Flächen ausgebildet, um eine exakte Positionierung des Schneideinsatzes in einer entsprechenden Aufnahme an dem jeweiligen Werkzeug bzw. Schneideinsatzhalter zu gewährleisten. Es wäre jedoch ohne weiteres möglich, daß die Schneidkanten in der Draufsicht auf die Hauptfläche gekrümmt verlaufen, wobei sowohl konkave als auch konvexe Verläufe der Schneidkanten und damit der Spanflächen denkbar sind.

Teile der Hauptflächen bilden in den Bereichen, wo sich die Hauptflächen mit den Spanflächen schneiden, Freiflächen. Bevorzugt ist dabei jedoch eine Ausführungsform der Erfindung, bei welcher mindestens ein zentraler Abschnitt der Hauptfläche als Anlagefläche ausgebildet ist. Es versteht sich, daß die jeweils als Anlagefläche genutzte Hauptfläche in einem konkreten Ausgangszustand an die jeweils nicht aktiven Schneidkanten angrenzt, wohingegen die einer aktiven Schneidkante zugeordnete Hauptfläche jeweils nur Freiflächenfunktion hat und dann nicht als Anlagefläche wirkt. In einer Variante der vorliegenden Erfindung, bei welcher der zentrale Abschnitt der Hauptfläche eine Ebene definiert, können die das Schneidkantenprofil definierenden Abschnitte bzw. Strukturen der Hauptfläche sich auch nach außen über die Ebene des zentralen Abschnittes hinaus erstrecken. In diesem Fall wäre allerdings dafür Sorge zu tragen, daß in einer Einbaulage, in welcher der zentrale Abschnitt der Hauptfläche eine Anschlagfläche bildet, die entsprechenden, über die Hauptfläche hervorstehenden Strukturen entsprechende Freistiche in der Schneideinsatzaufnahme des Werkzeuges vorfinden, damit die nicht aktiven Schneidkanten in der entsprechenden Aufnahmetasche des Werkzeuges frei liegen und nicht durch Stützkräfte beaufschlagt werden.

Bevorzugt ist allerdings eine Ausführungsform der Erfindung, bei welcher die Hauptfläche im Bereich einer Schneidkante zwar im wesentlichen symmetrisch angeordnete Abflachungen aufweist, zwischen denen eine (bezogen auf die Anordnung entlang der Schneidkante) vorzugsweise zentriert angeordnete Erhebung verbleibt, wobei jedoch die Oberfläche dieser "Erhebung" mit dem zentralen Abschnitt der Hauptfläche in einer gemeinsamen Ebene liegt und eine Freifläche bildet. Ein solcher Schneideinsatz kann beispielsweise aus einem Rohling hergestellt werden, welcher eine durchgehend ebene Hauptfläche mit einem polygonalen Umriß aufweist, wobei beispielsweise an jeder zweiten Seite, welche als Schneidkante dienen soll, mit Ausnahme eines etwa in der Mitte der als Schneidkante dienenden Seite liegenden Bereiches, Abflachungen in die Hauptfläche eingeschliffen werden (oder aber von vornherein der Schneideinsatz beim Pressen und Sintern mit entsprechenden Abflachungen hergestellt wird), wobei es unerheblich ist, wie weit diese Abflachungen sich auch in den Bereich der angrenzenden Anlageflächen erstrecken. Auf jeden Fall sollten die Abflachungen beiderseits des etwa in der Mitte einer Spanfläche bzw. Schneidkante stehen bleibenden Bereiches so weit reichen, daß mindestens in dem mittleren Abschnitt eine Schneidkante verbleibt.

Zweckmäßigerweise sind entlang der Seitenwand des Schneideinsatzes Spanflächen und Anlageflächen im Wechsel zueinander angeordnet und jeweils zwei einander nächstliegende Anlageflächen sollten einen Winkel von mindestens 45° und von weniger als 180° miteinander einschließen. Auf diese Weise definieren die Anlageflächen einen Keil in einem Keilwinkelbereich zwischen 45 und weniger als 180°, wobei Winkel zwischen jeweils zwei aktiven Anlageflächen im Bereich von 60° bis 120° bevorzugt sind, weil derartige Winkel zwischen Anlageflächen eine optimale Positioniergenauigkeit ermöglichen.

Dies bedeutet, daß der Schneideinsatz in der Draufsicht auf die Hauptfläche mindestens sechs und vorzugsweise nicht mehr als zwölf Ecken aufweisen sollte, wobei allerdings auch Varianten denkbar sind, bei welchen nicht zwei nächstliegende Anlageflächen jeweils als aktive Anlageflächen wirken, sondern zwischen zwei aktiven Anlageflächen der Seitenwand auch noch (neben mindestens einer Spanfläche) eine weitere, nicht aktive Anlagefläche liegen kann.

In der bevorzugten Ausführungsform hat der Schneideinsatz gemäß der vorliegenden Erfindung die Grundform eines quadratischen Prismas, dessen Ecken abgeschrägt sind, wobei entweder die verbleibenden Seitenflächen des Prismas oder aber die erwähnten Abschrägungsflächen als Spanflächen ausgebildet sind und die jeweils verbleibenden Flächen als Anlageflächen ausgebildet sind.

Ein solcher Schneideinsatz ist im Ergebnis in der Draufsicht auf die Hauptfläche achteckig, wobei allerdings die Spanflächen und die Anlageflächen nicht notwendigerweise gleich langen Seiten entsprechen müssen und im übrigen abwechselnd entlang des Umfangs der Seitenwand an dem Schneideinsatz angeordnet sind.
Besonders bevorzugt ist eine Ausführungsform der Erfindung, bei welcher die Spanflächen zur Erzielung einer positiven Schneidengeometrie mit den Freiflächen der jeweils zugeordneten Hauptfläche einen Winkel von weniger als 90° einschließen. Dieser Winkel zwischen Spanfläche und Freifläche, der auch als "Keilwinkel" bezeichnet wird, beträgt in der bevorzugten Ausführungsform der Erfindung zwischen 70° und 80°. Zweckmäßigerweise erreicht man eine solche Schneidkantenform durch entsprechendes Auskehlen derjenigen Seitenflächen, die mit den Hauptflächen die Spankanten bilden. Dieses Auskehlen könnte zum einen einfach mit Hilfe einer entsprechend konkaven Ausbildung der Spanflächen (betrachtet in einem Schnitt senkrecht zu den Hauptflächen) erzielt werden, bevorzugt ist jedoch, daß die Seitenflächen, welche Spanflächen bilden, aus jeweils ebenen Flächenabschnitten gebildet werden, wobei, insbesondere dann, wenn der Schneideinsatz ein doppelseitiger Schneideinsatz ist, bei welchem Schneidkanten am Übergang der Spanflächen zu beiden gegenüberliegenden Hauptflächen ausgebildet werden, die unmittelbar an die gegenüberliegenden Hauptflächen bzw. Freiflächen angrenzenden Spanflächenabschnitte keilförmig aufeinanderzulaufen mit einem Keilwinkel zwischen vorzugsweise 140° und 160°, wobei jedoch der Grund dieses Keiles wieder aus einem ebenen Flächensegment besteht, welches senkrecht zu den beiden Hauptflächen ausgerichtet ist. Konkret bestehen also die die Spanflächen bildenden Seitenflächen aus mindestens drei Flächensegmenten, die symmetrisch zur Mittelebene des Schneideinsatzes angeordnet sind, wobei ein zentrales Flächensegment sich im wesentlichen senkrecht zu den oberen und unteren Hauptflächen erstreckt, während die daran angrenzenden, die Hauptflächen und/oder deren Abflachungen schneidenden Flächensegmente mit der Ebene der jeweils angrenzenden Hauptfläche einen Winkel von weniger als 90° einschließen.

Weiterhin ist eine Ausführungsform der Erfindung für bestimmte Anwendungsfälle bevorzugt, bei welcher der Übergang von einer zentralen Erhebung der Hauptfläche zu den seitlichen Abflachungen entlang einer schrägen oder abgerundeten Fläche und nicht entlang einer scharfen, sprunghaften bzw. stufenförmigen Kontur verläuft, so daß dementsprechend die Kontur der Schneidkante durch den Schnitt der Spanfläche mit der zentralen Erhebung und deren Übergang zu den Abflachungen gebildet wird.

Wie bereits erwähnt, betrifft die vorliegende Erfindung auch ein für die Schneideinsätze gemäß der vorliegenden Erfindung ausgestaltetes Dreh- oder Fräswerkzeug, welches mindestens eine und im Falle eines Fräswerkzeuges vorzugsweise mehrere Aufnahmen für einen Schneideinsatz hat, wie er vorstehend beschrieben wurde. Bei einem solchen Werkzeug sollte die Aufnahme für eine tangentiale Einbauweise des Schneideinsatzes ausgelegt sein, wobei eine Hauptanschlagfläche der Aufnahme für den Kontakt mit mindestens dem zentralen Abschnitt der Hauptfläche des Schneideinsatzes ausgelegt ist, während senkrecht zu dieser Hauptanschlagfläche der Aufnahme zwei weitere, zueinander abgewinkelte Anschlagflächen vorgesehen sind, welche einen Winkel von mindestens 45° und weniger als 180°, vorzugsweise höchstens 135° miteinander einschließen und für den Anschlag von zwei Anlageflächen des Schneideinsatzes vorgesehen sind, die zwischeneinander mindestens eine Spanfläche einschließen, die wiederum in einem Freistich zwischen den Anschlagflächen des Werkzeuges aufgenommen ist.

Gemäß einer Ausführungsform der vorliegenden Erfindung handelt es sich bei einem solchen Schneidwerkzeug um den Schneideinsatzhalter eines Drehwerkzeuges.

Gemäß einer alternativen Ausführungsform der vorliegenden Erfindung handelt es sich bei dem Schneidwerkzeug um ein zylindrisches, rotierendes Fräswerkzeug, an dessen Umfangsfläche die vorstehend ausführlich beschriebenen Schneideinsätze tangential einbaubar sind.

Es zeigen:
- Figur 1: eine perspektivische Ansicht eines Schneideinsatzes gemäß der vorliegenden Erfindung,
- Figuren 2a, b und Figuren 3 a - c Figuren 4 - 6: c verschiedene Ansichten des in Figur 1 dargestellten Schneideinsatzes, verschiedene Typen von Schneideinsätzen mit unterschiedlichen polygonalen Grundformen,
- Figur 7: eine alternative Ausführungsform eines Schneideinsatzes in einer Ansicht ähnlich Figur 1.
- Figuren 8a,b: 2 verschiedene perspektivische Ansichten eines mit dem erfindungsgemäßen Schneideinsatz ausgestatteten Drehwerkzeuges,
- Figur 9: Das Drehwerkzeug nach Figur 8 in einer Seitenansicht, einer Stimansicht und einer Ansicht von oben zusammen mit einem bearbeiteten Werkstück.
- Figur 10: Die Seitenansicht einer mit dem erfindungsgemäßen Schneideinsatz ausgestatteten Fräsmesserscheibe, und
- Figur 11, a-c: Verschiedene Ansichten einer Fräsmesserscheibe, teilweise in Arbeitsposition an einem Werkstück

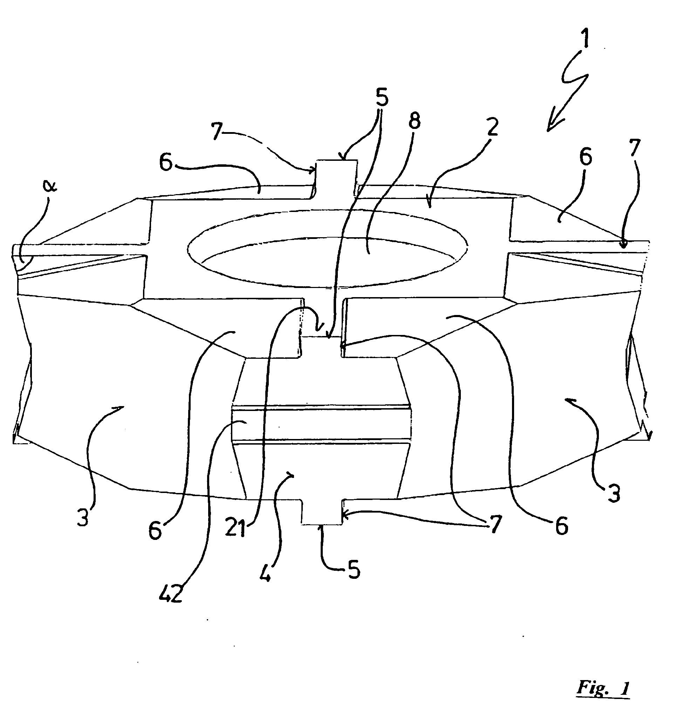

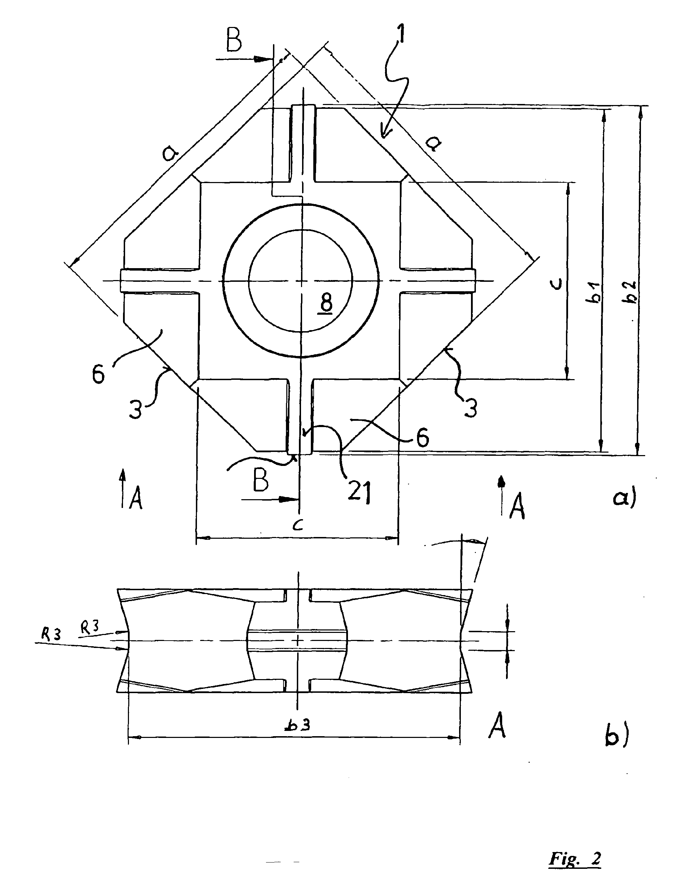

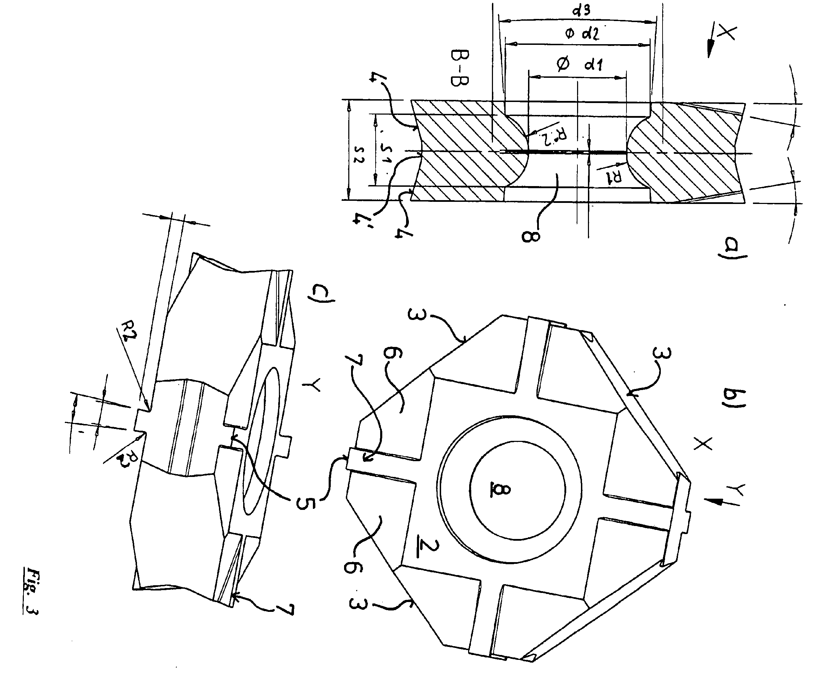

Man erkennt in Figur 1 sowie in den Figuren 2 und 3 den insgesamt mit 1 bezeichneten Schneideinsatz, welcher die Grundform eines polygonalen Parallelepipeds hat.

Der Schneideinsatz weist eine obere Hauptfläche 2 auf, deren Ebene im wesentlichen durch eine zentrale Anlagefläche 2 definiert wird, welche eine zentrale Befestigungsbohrung 8 umgibt. Die zentrale Anlagefläche 2 hat etwa zentrisch an ihren Seiten Ausläufer 21, welche Freiflächen zu einer schmalen Schneidkante 5 am Ende der Ausläufer definieren. Die Ausläufer sind dadurch hergestellt worden, daß die obere Fläche 2 beiderseits eines solchen Ausläufers 21 Abflachungen 6 aufweist, die gegenüber der zentralen Fläche 22 um einen Winkel zwischen 10° und 25° abgeflacht sind, so daß sich in der Mitte zwischen zwei Abflachungen 6 ein Vorsprung 7 bildet. Alle Übergänge in Eckbereichen, wie zum Beispiel am Übergang des Vorsprunges zu den Abflachungen 6, sind vorzugsweise mit einem kleinen Radius abgerundet., wie es an verschiedenen Stellen in den Figuren durch Angabe des Buchstaben R (R2, R3) angedeutet wird, die typischerweise im Bereich zwischen 0,1 und 1 mm liegen.

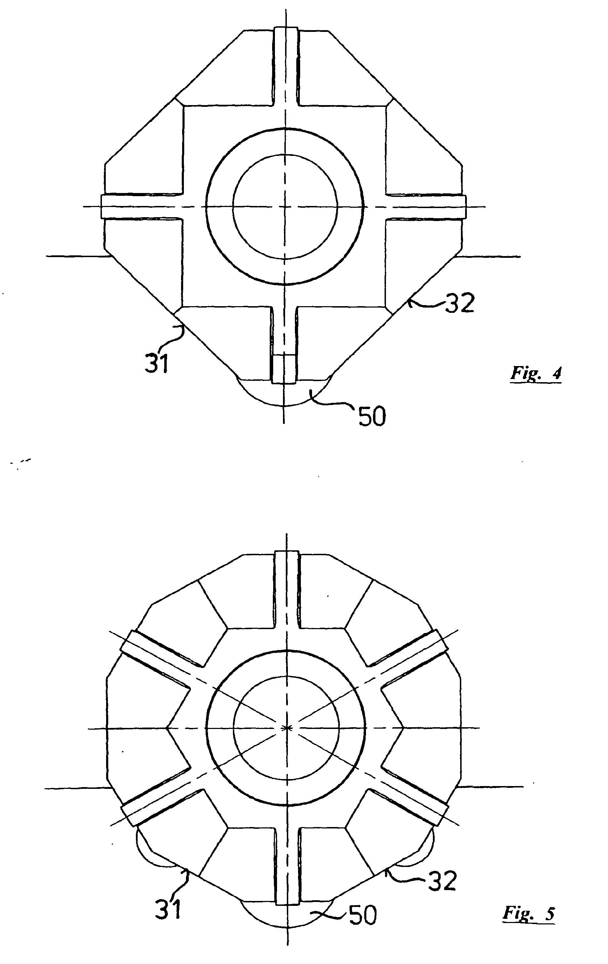

Am besten in der Draufsicht von oben entsprechend Figur 2a oder auch in Figur 4 erkennt man, daß der Schneideinsatz in dieser Ausführungsform eine im wesentlichen achteckige Grundform mit unterschiedlich langen Seiten hat, die man sich auch als quadratische Form der Seitenlänge a mit abgeschrägten Ecken vorstellen kann, wie es in Figur 2a besonders deutlich wird. Der Schneideinsatz ist den Figuren bis auf unvermeidbare Ungenauigkeiten durch Kopieren etc. maßstabsgetreu dargestellt und das Maß a in Figur 2a beträgt beispielsweise etwa 16 mm. Selbstverständlich sind auch andere Absolutmaße möglich und auch die relativen Maßen lassen sich noch in gewissen Bereichen variieren, auch wenn die vorliegend dargestellten Maßverhältnisse bevorzugt sind. Durch die Abschrägungen entstehen die kürzeren Seiten des Achtecks, welche Spanflächen definieren und den nach oben bzw. unten über die Abflachungen 6 überstehenden Vorsprung 7 erkennen lassen. Die dazwischen verbliebenen Seiten der quadratischen Grundform bilden die längeren Seiten des Achtecks. Wie man in der perspektivischen Ansicht gemäß Figur 1 und auch in den Figuren 2b und 3c weiterhin erkennt, sind diese längeren Seiten als Anlageflächen 3 ausgebildet, während die kürzeren Seiten 4 als Spanflächen ausgebildet sind. Wie man weiterhin anhand der Figuren sehen kann, sind die Schneideinsätze als doppelseitige Schneideinsätze ausgebildet, d.h. die Oberseite 2 ist identisch so wie die entsprechenden Unterseite ausgebildet und so angeordnet, daß der Schneideinsatz bezüglich einer parallel zu der oberen Anlagefläche 22 verlaufenden Mittelebene spiegelbildlich ausgebildet ist. Dies schließt allerdings eine Ausgestaltung des Schneideinsatzes nicht aus, bei welcher die Schneidkanten 5 von Ober- und Unterseite nicht spiegelbildlich, sondern relativ zueinander um beispielsweise 45° verdreht wären. Auch die Anlageflächen und Spanflächen wären dann auf den gegenüberliegenden Seiten versetzt und könnten jeweils durch (beispielsweise dreieckige) Facetten an der umlaufenden Seitenwand gebildet werden.

In den hier dargestellten Ausführungsformen liegt der Keilwinkel zwischen einer Spanfläche 4 und der oberen Freifläche 21 der Ausläufer 7 typischerweise zwischen 65° und 80°, vorzugsweise bei etwa 75° und die Spanfläche 4 verläuft unter einem etwas größeren Keilwinkel von z. B. 85° zu den abgeschrägten Flächen 6 beiderseits des Vorsprungs 7. Durch die Einwärtsneigung der Spanflächen 4 gegenüber den oberen Freiflächen 21 bzw. gegenüber einer Senkrechten zur diesen Freiflächen entsteht an der Schneidkante 5 eine positive Schneidengeometrie.

Wenn die Spanfläche 4 auch als ausgekehlte, im Querschnitt (senkrecht zur Hauptfläche und zur Spanfläche) kreisförmig oder elliptisch konkave Fläche hergestellt werden könnte, so ist dennoch eine Ausgestaltung bevorzugt, bei welcher die unmittelbar an die Schneidkanten 5 angrenzenden Spanflächenbereiche 4 als ebene Flächensegmente ausgebildet sind, welche durch ein Grundflächensegment 42 mit der weiteren als Spanfläche 4 dienenden Flächensegment verbunden ist, das auf der jeweils gegenüberliegenden Seite des Schneideinsatzes an eine entsprechende Schneidkante 5 angrenzt. Das ebene Flächenesegment 42 zwischen den beiden Spanflächen 4, 4' verläuft wiederum senkrecht zu der ebenen oberen Anlagefläche 22 und der entsprechenden unteren Anlagefläche.

Weitere Details des Schneideinsatzes ergeben sich aus den Figuren 2a, b.und 3a-c. Figur 2a läßt sehr deutlich die quadratische Grundform mit den abgeschrägten Ecken erkennen, aus welcher die achteckige Form entsteht. Wie man sieht, sind auf jeder Seite des Schneideinsatzes vier Vorsprünge 7 mit jeweils einer entsprechenden Schneidkante 5 vorgesehen, so daß der Schneideinsatz auf Vorder- und Rückseite insgesamt acht Vorsprünge 7 mit insgesamt acht Schneidkanten 5 aufweist. Die jeweils einen Spanflächenabschnitt einschließenden Seitenflächen bilden Anlageflächen 3, welche den in einem Schneidwerkzeug aufgenommenen Schneideinsatz während einer spanenden Bearbeitung abstützen.

Anhand der Seitenansicht 2b sowie der Schnittansicht 3a erkennt man, daß die Flächen 6 in der hier dargestellten Ausführungsform um etwa 10° gegenüber der oberen Anlagefläche 22 geneigt sind, während die Spanflächen 4 gegenüber einer Senkrechten zu den oberen und unteren Anlageflächen 22 sogar um etwa 15° geneigt verlaufen, d.h. mit den oberen Freiflächen 21 einen Keilwinkel von 75° einschließen und auch mit den abgeschrägten Flächen 6 immer noch einen leicht spitzen Winkel von etwa 85° einschließen. Die Befestigungsbohrung verjüngt sich von beiden Hauptflächen aus entlagen eines im Querschnit gemäß Figur 3a kreisförmigen Bogens mit dem Radius R1 von etwa 2 mm. Die Höhe des Vorsprunges 7 im Bereich einer Schneidkante 5, d.h. der Abstand der Schneidkante 5 von den beiderseits des Vorsprunges vorgesehenen Abflachungen 6 beträgt typischerweise zwischen 0,2 und z.B. 2 mm, wobei dieses Maß letztlich von der Größe des Schneideinsatzes und von der Ausdehnung und Neigung der Abflachungen 6 abhängt. Konkret beträgt dieser Abstand bei der dargestellten Ausführungsform etwas weniger als 1 mm, z.B. 0,6 bis 0,8 mm, so daß mit einem solchen Schneideinsatz Nuten in etwas geringerer Tiefe, also etwa in der Größenordnung von etwa 0,7 mm, hergestellt werden können. Es versteht sich aber, daß die konkreten Maße und Winkel eines solchen Schneideinsatzes in weiten Bereichen variiert werden können.

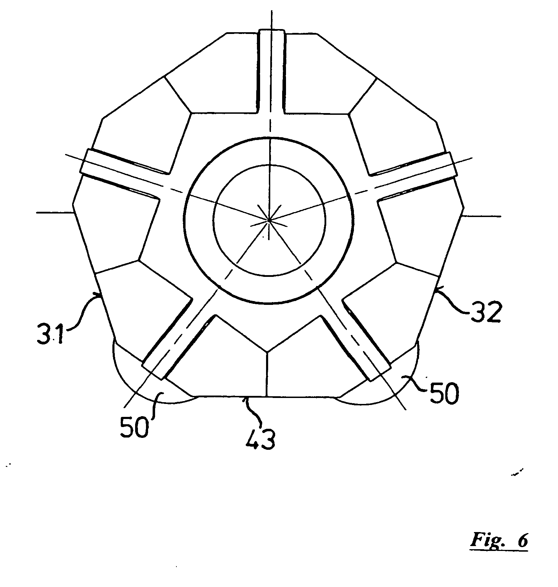

Anhand der Figuren 4 bis 6 erkennt man, daß neben der bereits beschriebenen, achteckigen Grundform eines Schneideinsatzes auch andere polygonale Grundformen, wie z.B. eine zwölfeckige Form (Figur 5) oder eine zehneckige Grundform gemäß Figur 6, realisiert werden können, wobei jeweils auf einer Seite entsprechend fünf oder gar sechs Schneidkanten untergebracht werden können. Die Schneideinsätze sind hier schematisch in einem entsprechende Anschlagflächen aufweisenden Plattensitz dargestellt, an denen die Anlageflächen 31, 32 der Schneideinsätze anliegen. Die einer aktiven Schneidkante 5 jeweils diametral oder nahezu diametral gegenüberliegenden Schneidkanten 5 und auch die daran anschließenden Spanflächen 4, die sich innerhalb des jeweiligen Plattensitzes befinden, sind zu ihrer Schonung jeweils in einem Freistich 50 aufgenommen,

Bei der zwölfeckigen Grundform gemäß Figur 5 schließen die seitlichen Anlageflächen 31, 32 einen relativ großen Winkel von 120° miteinander ein, was allerdings kein grundsätzlicher Nachteil ist, da durch die zusätzliche zentrale Befestigungsschraube immer eine reproduzierbare Positionierung und Halterung erzielt wird.

Bei der zehneckigen polygonalen Grundform (Figur 6) schließen die gleichzeitig mit den Anschlagsflächen einer Schneideinsatzaufnahme in Eingriff zu bringenden Anlageflächen 31, 32 einen relativ spitzen Winkel von nur etwa 36° miteinander ein und die weitere Anlagefläche 43 könnte sogar zu einer Überbestimmung der Plattenposition führen, was eine sehr genaue Fertigung des Plattensitzes erfordern würde. Allerdings kann man in einem solchen Fall aus der Not eine Tugend machen, indem die zu den Anlageflächen 31, 32 korrespondierenden Anschlagflächen mit einem geringfügig kleineren Keilwinkel von beispielsweise 35,5° hergestellt werden, so daß sie durch den ein entsprechendes geringes Übermaß aufweisenden Schneideinsatz beim Einpressen desselben etwas aufgeweitet werden, bis die am Grund des Plattensitzes anschlagende Fläche 43 eine weiteres Einschieben des Schneideinsatzes verhindert. Auf diese Weise erreicht man ebenfalls eine sehr genaue Positionierung des Schneideinsatzes, der zudem noch in seinem Sitz durch die Klemmkraft der seitlichen Anschlagsflächen besser festgehalten wird.

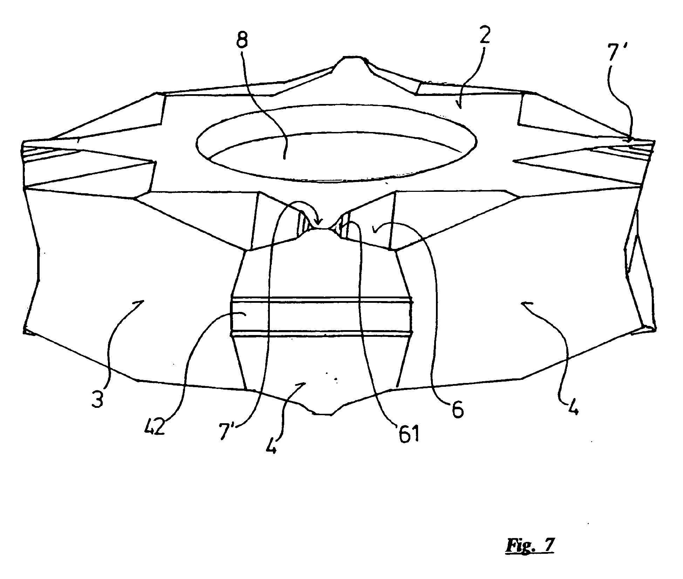

Die alternative Ausführungsform gemäß Figur 7 unterscheidet sich von der in den Figuren 1 bis 5 dargestellten Ausführungsform im wesentlichen nur durch den abgeschrägten oder auch leicht gekrümmt verlaufenden Übergang der oberen Freifläche 21 zu den seitlichen Abflachungen 6, so daß dementsprechend die Schneidkante 5 schräg bzw. abgerundet verlaufende Nebenschneidkanten hat, die den Übergang zu den Abflachungen 6 bilden, so daß eine durch eine solche Schneidkante erzielte Struktur nicht wie im Falle der erstgenannten Ausführungsform einen rechteckigen Querschnitt, sondern einen entweder trapezförmigen oder allgemeiner trogförmigen Querschnitt hat.

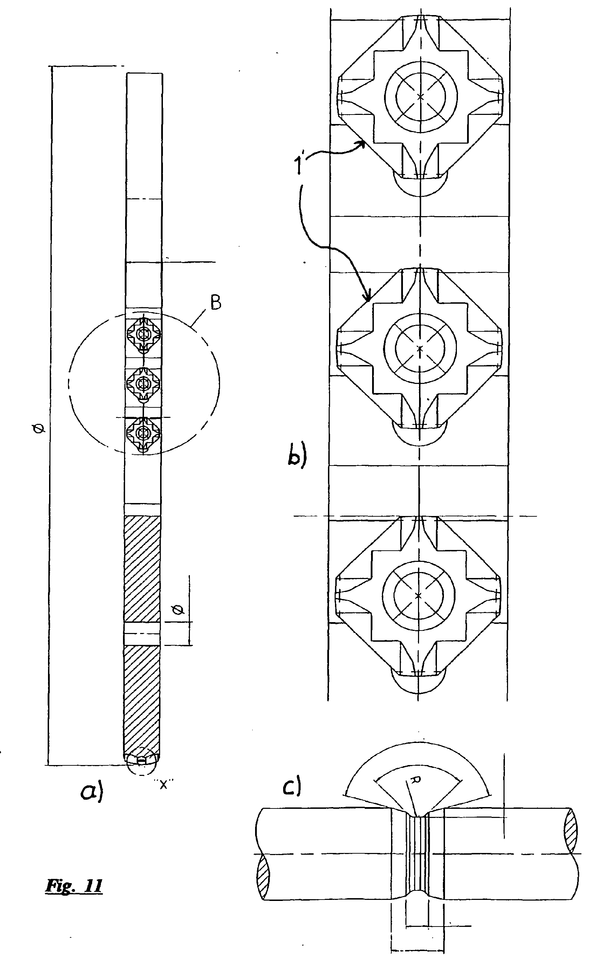

Auch die Abflachungen 6 fallen zusätzlich seitlich etwas ab. Eine entsprechende Struktur ist beispielsweise an der mit einem solchen Schneideinsatz hergestellten Struktur einer Nut in Figur 11c zu erkennen.

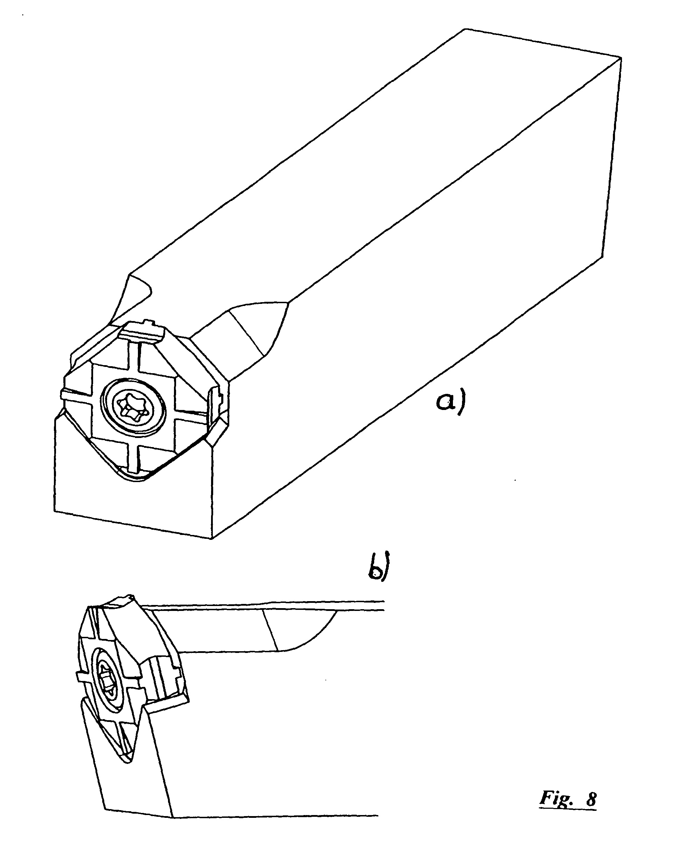

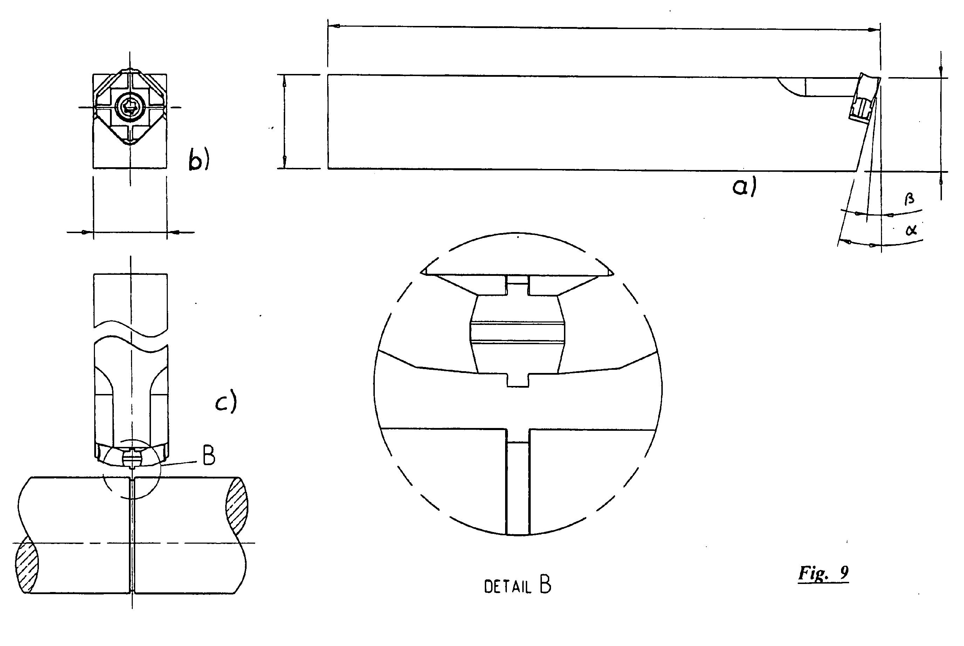

Die Figuren 8a, b und 9a-c zeigen einen erfindungsgemäßen Schneideinsatz, der an einem Drehwerkzeug montiert ist. Die Figuren 8a, b zeigen ein Drehwerkzeug mit dem erfindungsgemäßen Schneideinsatz in zwei verschiedenen perspektivischen Ansichten.

Aus den Figuren 8 und 9 erkennt man deutlich die sogenannte "tangentiale" Einbaulage des Schneideinsatzes und die genauen Winkel α, β, wie sie für die Freiflächen 21 und die Abflachungen 6 eingestellt sind. mit einer leichten Neigung von 15% (= α) einer vorderen, stirnseitigen Anschlagsfläche gegenüber der Tangente an ein entsprechendes Werkstück, an welcher Anschlagsfläche die zentrale Anlagefläche 2 des Schneideinsatzes im eingebauten Zustand anliegt. Die Neigung dieser stirnseitigen Anschlagsfläche des Drehwerkzeuges entspricht in etwa der Neigung der Spanfläche relativ zu einer Senkrechten auf die Anlagefläche 2, so daß die Spanfläche in etwa horizontal und im wesentlichen parallel zur Vorschubrichtung des entsprechenden Drehwerkzeuges liegt. Die Einbaulage ist insbesondere in Figur 9a mit den entsprechenden Winkeln genau dargestellt.

Um eine der Schneidkanten 5 mit dem Werkstück in Eingriff bringen zu können, wird der Schneideinsatz montiert, wie es in den Figuren 9a, b im einzelnen dargestellt ist. Dabei ergibt sich eine gerade noch positive Schneidengeometrie, die bekanntermaßen geringe Schnittkräfte gewährleistet. Figur 9c zeigt, wie der Schneideinsatz 1 mit Hilfe eines Drehwerkzeuges 10 an ein Werkstück 20 zugestellt wird, um eine Nut 30 zu erzeugen. Figur 9c ist als "Detail B" nochmals vergrößert in Figur 9 wiedergegeben. Wie man sieht, kann die Nut maximal eine Tiefe aufweisen, welche der Höhe der Schneidkante 5 über den Abflachungen 6 entspricht. Diese Einbauweise eines Schneideinsatzes nennt man tangential, weil die Hauptflächen des Schneideinsatzes, d.h. die obere Fläche 2 und entsprechend auch die gegenüberliegende untere Fläche in etwa tangential zu der bearbeiteten Werkstückoberfläche verlaufen, da diese Flächen gleichzeitig auch die Ebene der Freiflächen 21 definieren, welche von der exakt tangentialen Ausrichtung nur um einen kleinen Freiwinkel abweichen.

Wie man weiterhin anhand der Figuren 8 und 9 erkennen kann, bilden drei jeweils von einer Schneidkante am weitesten entfernt gelegene Anlageflächen des Schneideinsatzes die Stützflächen in einer entsprechenden Werkzeugaufnahme. Zum einen ist dies die zentrale Anlagefläche 2 auf der der aktiven Schneidkante gegenüberliegenden Seite des Schneideinsatzes, und zum anderen handelt es sich um die seitlichen Anlageflächen 3, welche nicht an die aktive Spanfläche 4, sondern an die diametral gegenüberliegende Spanfläche 4 angrenzen. Durch derart positionierte Anlageflächen erreicht man einen sehr exakt definierten und festen Plattensitz. Der Schneideinsatz 1 wird mittels einer Befestigungsschraube, welche die zentrale Befestigungsbohrung 8 durchgreift, an dem Schneideinsatzhalter befestigt.

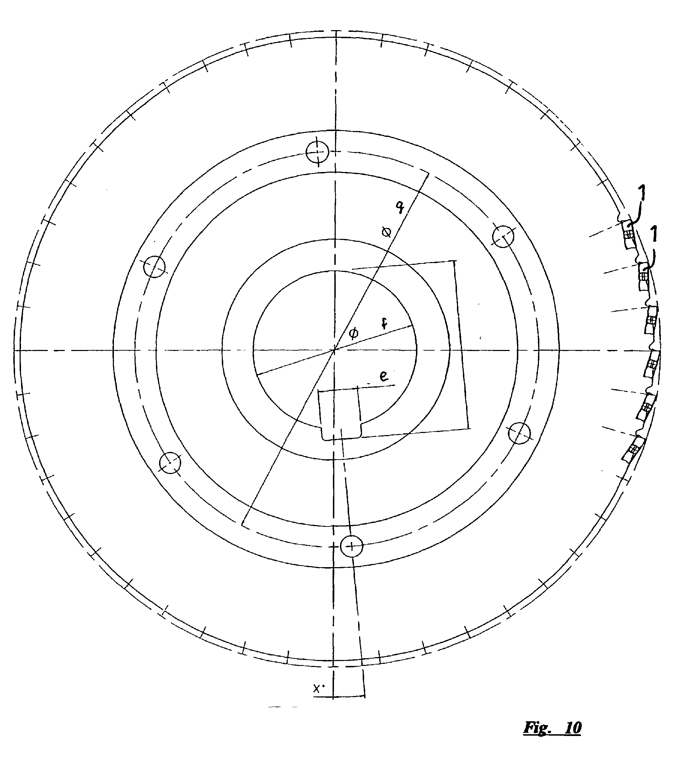

In Figur 10 erkennt man einen Scheibenfräser in einer Seitenansicht, der für die Bestückung mit einer Vielzahl der erfindungsgemäßen Wendeschneidplatten ausgestattet ist. In dem darstellten Ausführungsbeispiel können bis zu 44 Wendeschneidplatten in tangentialer Bauweise an dem Außenumfang eines Scheibenfräsers befestigt werden. Tangentiale Einbauweise bedeutet auch hier wiederum, daß die Hauptflächen 22 in etwa tangential zum Umfang des Scheibenfräsers verlaufen und nur um den erforderlichen Freiwinkel gegenüber dieser tangentialen Ausrichtung abgewinkelt sind. Diese tangentiale Einbauweise ermöglicht mit Vorteil, daß die Befestigungsschrauben im wesentlichen in radialer Richtung montiert werden können, so daß zwischen benachbarten Schneideinsätzen ein relativ geringer Abstand eingehalten werden kann und somit die aktiven Schneidkanten der Schneideinsätze in rascher Folge hintereinander angeordnet sind. Ein solcher Scheibenfräser hat typischerweise einen Durchmesser von mehreren 100 mm.

Figur 11a zeigt eine Draufsicht auf den Umfang eines solchen Scheibenfräsers, wobei in einem Kreis B nur drei der entlang des Umfanges angeordneten Schneideinsätze dargestellt sind. Dieses Detail B ist in Figur 11b nochmals vergrößert dargestellt. In diesem Fall ist der Schneideinsatz gemäß Figur 7 für den dargestellten Scheibenfräser verwendet worden. Wie man in Figur 10 erkennt, sind auch in diesem Fall die einzelnen Schneideinsätze mit ihren Hauptflächen, die gleichzeitig die Ebene der Freiflächen definieren, gegenüber einer Tagenten an den Umfang des Scheibenfräsers einwärts geneigt, wobei die Umlaufrichtung des Scheibenfräsers im Betrieb bei der dargestellten Einbauweise dem Uhrzeigersinn entgegengesetzt ist.

In Figur 11c erkennt man das Profil, welches mit Hilfe eines solchen Scheibenfräsers und dem in Figur 7 dargestellten Schneideinsatz an einer Welle, wie zum Beispiel einer Nockenwelle oder Kurbelwelle, hergestellt werden kann. Bei einer solchen Herstellung drehen sich die Welle und der Scheibenfräser gleichzeitig, wobei die entsprechende umlaufende Nut im Verlauf einer einzigen Drehung der Welle hergestellt wird.

## Patentansprüche

1. Schneideinsatz in Form eines Polyeders mit mindestens zwei im wesentlichen parallelen Hauptflächen (2) mit jeweils polygonalem Umriß und mit mehreren Seitenflächen (3, 4), welche die parallelen Hauptflächen (2) miteinander verbinden, wobei am Übergang mindestens eines Teils der Seitenflächen (4) zu mindestens einer der Hauptflächen (2) Schneidkanten (5) ausgebildet sind,wobei:
a) ein Teil (4) der Seitenflächen Spanflächen bildet,
b) der mit der Spanfläche eine Schneidkante bildende Teil (21) der Hauptfläche (2) eine Freifläche (21) bildet
c) ein Teil (3) der Seitenflächen und ein Teil (22) der Hauptfläche (2) Anlageflächen bilden,
**dadurch gekennzeichnet, dass**
die Schneidkanten ein vorgebbares Profil haben, das durch eine Strukturierung der betreffenden Hauptfläche in der Nähe der Schneidkante (5) gebildet wird, indem die Hauptfläche (2) im Bereich einer Schneidkante (5) zwei im wesentlichen symmetrisch angeordnete Abflachungen (6) aufweist, zwischen denen eine zentrale Erhebung (7) verbleibt, deren Oberfläche (21) eine Freifläche bildet und mit dem zentralen Abschnitt in einer gemeinsamen Ebene liegt.

2. Schneideinsatz nach Anspruch 1, **dadurch gekennzeichnet, daß** die seitlichen Anlageflächen (3) von den Spanflächen (4) getrennt und gegenüber diesen vorzugsweise abgewinkelt ausgebildet sind.

3. Schneideinsatz nach Anspruch 1 oder 2, **dadurch gekennzeichnet, daß** jeweils mindestens ein zentraler Abschnitt (22) der Hauptfläche (2) als Anlagefläche (22) ausgebildet ist.

4. Schneideinsatz nach einem der Ansprüche 1 bis 3, **dadurch gekennzeichnet, daß** die Hauptfläche mindestens im Bereich der Schneidkanten (5) Einsenkungen bzw. Abflachungen (6) und/oder Erhebungen (7) aufweist, die durch den Schnitt mit der Spanfläche bzw. den Spanflächen (4) ein Schneidkantenprofil definieren.

5. Schneideinsatz nach einem der Ansprüche 1 bis 4, **dadurch gekennzeichnet, daß** der zentrale Abschnitt der Hauptfläche eine Ebene definiert, wobei der das Schneidkantenprofil definierenden Strukturen der Hauptfläche (2) sich nach außen über die Ebene des zentralen Abschnittes (22) hinaus erstreckt.

6. Schneideinsatz nach einem der Ansprüche 1 bis 5, **dadurch gekennzeichnet, daß** die gesamte umlaufende Seitenfläche durch mindestens sechs in der Draufsicht auf die Hauptfläche gegeneinander abgewinkelten Flächensegmenten besteht, von denen mindestens drei als Spanflächen (4) und mindestens drei als ebene Anlageflächen (3) ausgebildet sind, wobei die Spanflächen beiderseits jeweils von mindestens einer Anlagefläche begrenzt wird.

7. Schneideinsatz nach Anspruch 6, **dadurch gekennzeichnet, daß** entlang des seitlichen Umfangs des Schneideinsatzes Spanflächen (4) und Anlageflächen im Wechsel zueinander angeordnet sind, wobei zwei jeweils einander nächstliegende Anlageflächen einen Winkel von weniger als 180° und von mehr als 90° miteinander einschließen.

8. Schneideinsatz nach einem der Ansprüche 1 bis 7, **dadurch gekennzeichnet, daß** er die Grundform eines quadratischen Prismas hat, dessen Ecken abgeschrägt sind, wobei entweder die verbleibenden Seitenflächen des Prismas oder die Abschrägungsflächen als Spanflächen ausgebildet sind und die jeweils verbleibenden Flächen als Anlageflächen ausgebildet sind.

9. Schneideinsatz nach einem der Ansprüche 1 bis 8, **dadurch gekennzeichnet, daß** die Spanflächen zur Erzielung einer positiven Schneidgeometrie mit den Freiflächen bzw. der jeweils zugeordneten Hauptfläche (2) einen Winkel von weniger als 90° einschließen,.

10. Schneideinsatz nach Anspruch 9, **dadurch gekennzeichnet, daß** der Keilwinkel der Schneidkanten (5) zwischen 70° und 80° beträgt.

11. Schneideinsatz nach einem der Ansprüche 1 bis 10, **dadurch gekennzeichnet, daß** er als doppelseitiger Schneideinsatz ausgebildet ist, bei welchem am Übergang beider im wesentlichen paralleler Hauptflächen zu den durch einen Teil der Seitenflächen gebildeten Spanflächen Schneidkanten ausgebildet sind.

12. Schneideinsatz nach Anspruch 11, **dadurch gekennzeichnet, daß** die die Spanflächen bildenden Seitenflächen ausgekehlt sind und aus mindestens drei Flächensegmenten bestehen, die symmetrisch zur Mittelebene des Schneideinsatzes angeordnet sind, wobei ein zentrales Flächensegment (42) sich im wesentlichen senkrecht zu den oberen und unteren Hauptflächen erstreckt, während die daran angrenzenden, die Hauptfläche (2) oder deren Abflachungen (6) schneidenden Flächensegmente (41) mit der Ebene der Hauptfläche einen Winkel < 90° einschließen.

13. Schneideinsatz nach einem der Ansprüche 1 bis 12, **dadurch gekennzeichnet, daß** der Übergang von einer zentralen Erhebung (7) zu seitlichen Abflachungen (6) entlang einer schrägen oder abgerundeten Fläche verläuft, so daß die Kontur der Schneidkante durch den Schnitt der Spanfläche mit der zentralen Erhebung und deren Übergang zu den Abflachungen gebildet wird.

14. Dreh- oder Fräswerkzeug mit mindestens einer oder mehreren Schneideinsätze nach einem der Ansprüche 1 bis 13, und mit entreprechenden Aufnahmen für den, bzw. die Schneideinsätze versehen ist, **dadurch gekennzeichnet, daß** die Aufnahme für eine tangentiale Einbauweise des Schneideinsatzes ausgelegt ist, wobei eine Hauptfläche der Aufnahme für den Kontakt mit mindestens dem zentralen Abschnitt der Hauptfläche (22) des Schneideinsatzes ausgelegt ist, während senkrecht zu dieser Hauptanschlagfläche zwei weitere, zueinander abgewinkelte Anschlagflächen vorgesehen sind, welche einen Winkel von mehr als 45° und weniger als 135° miteinander einschließen, und für den Anschlag von zwei Anlageflächen (3) des Schneideinsatzes vorgesehen sind, die zwischeneinander mindestens eine Spanfläche einschließen, welche in einem Freistich zwischen den schräg verlaufenden Anschlagflächen aufgenommen ist.

15. Schneidwerkzeug nach Anspruch 14, **dadurch gekennzeichnet, daß** es sich um den Schneideinsatzhalter eines Drehwerkzeuges handelt.

16. Schneidwerkzeug nach Anspruch 114, **dadurch gekennzeichnet, daß** es als im wesentlichen zylindrisches, rotierendes Fräswerkzeug ausgebildet ist, an dessen Umfangsfläche die Schneideinsätze nach einem der Ansprüche 1 bis 14 tangential einbaubar sind.

## Claims

1. A cutting insert in the form of a polyhedron comprising at least two substantially parallel main surfaces (2) each of a polygonal outline and a plurality of side surfaces (3, 4) connecting the parallel main surfaces (2) together, wherein cutting edges (5) are provided at the transition of at least a portion of the side surfaces (4) to at least one of the main surfaces (2), wherein:
a) a portion (4) of the side surfaces forms rake surfaces,
b) the portion (21) of the main surface (2), that with the rake surface forms a cutting edge, forms a relief surface (21), and
c) a portion (3) of the side surfaces and a portion (22) of the main surface (2) form support surfaces,
**characterised in that**
the cutting edges have a predeterminable profile formed by structuring of the main surface in question in the proximity of the cutting edge (5), by the main surface (2) in the region of a cutting edge (5) having two substantially symmetrically arranged flats (16), between which there remains a central projection (7) whose surface (21) forms a relief surface and lies with the central portion in a common plane.

2. A cutting insert according to claim 1 **characterised in that** the lateral support surfaces (3) are separated by the rake surfaces (4) and are preferably provided in angled relationship with respect thereto.

3. A cutting insert according to claim 1 or claim 2 **characterised in that** at least one central portion (22) of the main surface (2) is respectively in the form of a support surface (22).

4. A cutting insert according to one of claims 1 to 3 **characterised in that** at least in the region of the cutting edges (5) the main surface has recesses or flats (6) and/or
projections (7) which form a cutting edge profile through the intersection with the rake surface or surfaces (4).

5. A cutting insert according to one of claims 1 to 4 **characterised in that** the central portion of the main surface defmes a plane, wherein the structuring of the main surface (2), that defines the cutting edge profile, extends outwardly beyond the plane of the central portion (22).

6. A cutting insert according to one of claims 1 to 5 **characterised in that** the entire peripherally extending side surface is provided by at least six surface segments which are angled relative to each other in plan view on to the main surface and of which at least three are in the form of rake surfaces (4) and at least three are in the form of flat support surfaces (3), wherein the rake surfaces are delimited on both sides by at least one respective support surface.

7. A cutting insert according to claim 6 **characterised in that** rake surfaces (4) and support surfaces are arranged in alternate relationship along the lateral periphery of the cutting insert, wherein two respectively mutually most closely adjacent support surfaces include an angle of less than 180° and more than 90°.

8. A cutting insert according to one of claims 1 to 7 **characterised in that** it is of the basic shape of a square prism, the corners of which are bevelled, wherein either the remaining side surfaces of the prism or the bevelled surfaces are in the form of rake surfaces and the respectively remaining surfaces are in the form of support surfaces.

9. A cutting insert according to one of claims 1 to 8 **characterised in that** the rake surfaces include an angle of less than 90° to achieve a positive cutting geometry with the relief surfaces or the respectively associated main surface (2).

10. A cutting insert according to claim 9 **characterised in that** the taper angle of the cutting edges (5) is between 70° and 80°.

11. A cutting insert according to one of claims 1 to 10 **characterised in that** it is in the form of a double-sided cutting insert, in which cutting edges are provided at the transition of both substantially parallel main surfaces to the rake surfaces formed by a portion of the side surfaces.

12. A cutting insert according to claim 11 **characterised in that** the side surfaces forming the rake surfaces are fluted and comprise at least three surface segments arranged symmetrically relative to the central plane of the cutting insert, and wherein a central surface segment (42) extends substantially perpendicularly to the upper and lower main surfaces while the surface segments (41) adjoining same and intersecting the main surface (2) or the flats (6) thereof include an angle <90° with the plane of the main surface.

13. A cutting insert according to one of claims 1 to 12 **characterised in that** the transition from a central projection (7) to lateral flats (6) extends along an inclined or rounded surface so that the contour of the cutting edge is formed by the intersection of the rake surface with the central projection and the transition thereof to the flats.

14. A turning or milling tool comprising at least one or more cutting inserts according to one of claims 1 to 13 and is provided with corresponding receiving means for the cutting insert or inserts, **characterised in that** the receiving means is designed for tangential installation of the cutting insert, wherein a main surface of the receiving means is designed for contact with at least the central portion of the main surface (22) of the cutting insert while provided perpendicularly to said main support surface are two further mutually angled abutment surfaces which include an angle of more than 45° and less than 135° with each other and are provided for the abutment of two support surfaces (3) of the cutting insert, which include between each other at least one rake surface which is received in a relief groove between the inclinedly extending abutment surfaces.

15. A cutting tool according to claim 14 **characterised in that** it is the cutting insert holder of a turning tool.

16. A cutting tool according to claim 14 **characterised in that** it is in the form of a substantially cylindrical rotating milling tool, at the peripheral surface of which the cutting inserts according to one of claims 1 to 14 can be tangentially fitted.

## Revendications

1. Insert de coupe se présentant sous la forme d'un polyèdre doté d'au moins deux faces principales (2) sensiblement parallèles ayant chacune un contour polygonal et de plusieurs faces latérales (3, 4) qui relient entre elles les faces principales parallèles (2), ces arêtes de coupe (5) étant conformées au niveau de la transition d'au moins une partie des faces latérales (4) vers au moins une des faces principales (2) :
a) une partie (4) des faces latérales formant des faces de coupe,
b) la partie (21) de la face principale (2), qui forme avec la face de coupe une arête de coupe, formant une face de dépouille (21),
c) une partie (3) des faces latérales et une partie (22) de la face principale (2) formant des faces de positionnement,
**caractérisé en ce que**
les arêtes de coupe ont un profil prédéterminable qui est formé en structurant la face principale en question au voisinage de l'arête de coupe (5) de façon à ce que la face principale (2) possède, au niveau d'une arête de coupe (5), deux méplats (6) disposés de façon sensiblement symétrique et entre lesquels est maintenue une élévation centrale (7) dont la surface (21) forme une face de dépouille et est située dans un plan commun avec la portion centrale.

2. Insert de coupe selon la revendication 1, **caractérisé en ce que** les faces latérales de positionnement (3) sont séparées des faces de coupe (4) et sont conformées de préférence angulairement par rapport à celles-ci.

3. Insert de coupe selon la revendication 1 ou 2, **caractérisé en ce que** au moins une portion centrale (22) de chaque face principale (2) est conformée en face de positionnement (22).

4. Insert de coupe selon l'une des revendications 1 ou 3, **caractérisé en ce que** la face principale possède au moins dans la région des arêtes de coupe (5) des dépressions resp. des méplats (6) et/ou des élévations (7) qui définisse*nt, par l'intersection avec la face de coupe resp. les faces de coupe (4), un profil d'arête de coupe.

5. Insert de coupe selon l'une des revendications 1 à 4, **caractérisé en ce que** la portion centrale de la face principale définit un plan, la structure de la face principale (2), qui définit le profil d'arête de coupe, s'étendant vers l'extérieur au-delà du plan de la portion centrale (22).

6. Insert de coupe selon l'une des revendications 1 à 5, **caractérisé en ce que** toute la face latérale périphérique est constituée d'au moins six segments de face qui sont disposés angulairement l'un par rapport à l'autre lorsque l'on regarde la face principale en vue de dessus et dont au moins trois sont conformés en faces de coupe (4) et au moins trois en faces de positionnement planes (3), les faces de coupe étant bordées sur chacun des deux côtés par au moins une face de positionnement.

7. Insert de coupe selon la revendication 6, **caractérisé en ce que** des faces de coupe (4) et des faces de positionnement sont disposées alternativement le long de la périphérie latérale de l'insert de coupe, deux faces de positionnement adjacentes formant entre elles un angle de moins de 180° et de plus de 90°.

8. Insert de coupe selon l'une des revendications 1 à 7, **caractérisé en ce qu'**il a la forme d'un prisme carré dont les coins sont biseautés, les autres faces latérales du prisme et les faces biseautées étant conformées en faces de coupe et les autres faces étant conformées en faces de positionnement.

9. Insert de coupe selon l'une des revendications 1 à 8, **caractérisé en ce que** les faces de coupe forment un angle de moins de 90° avec les faces de dépouille ou chaque face principale (2) associée afin d'obtenir une géométrie de coupe positive.

10. Insert de coupe selon la revendication 9, **caractérisé en ce que** l'angle de tranchant des arêtes de coupe (5) est compris entre 70° est 80°.

11. Insert de coupe selon l'une des revendications 1 à 10, **caractérisé en ce qu'**il est conformé en insert de coupe à double face dans lequel des arêtes de coupe sont conformées au niveau de la transition des deux faces principales sensiblement parallèles vers les faces de coupe formées par une partie des faces latérales.

12. Insert de coupe selon la revendication 11, **caractérisé en ce que** les faces latérales formant les faces de coupe sont cannelées et sont constituées d'au moins 3 segments de face qui sont disposés symétriquement par rapport au plan médian de l'insert de coupe, un segment de face central (42) s'étendant sensiblement perpendiculairement aux faces principales supérieure et inférieure, tandis que les segments de face adjacents (41) coupant la face principale (2) ou ses méplats (6) forment un angle inférieur à 90° avec le plan de la face principale.

13. Insert de coupe selon l'une des revendications 1 à 12, **caractérisé en ce que** la transition de l'élévation centrale (7) vers des méplats latéraux (6) s'étend le long d'une face oblique ou arrondie de sorte que le contour de l'arête de coupe est formé par l'intersection de la face de coupe avec l'élévation centrale et sa transition vers les méplats.

14. Outil de fraisage ou de tournage, lequel est doté d'au moins un ou plusieurs insert(s) de coupe selon l'une des revendications 1 à 13 et de logements correspondants destinés à l'insert de coupe resp. aux inserts de coupe, **caractérisé en ce que** le logement est conformé de façon à permettre un mode de montage tangentiel de l'insert de coupe, une face principale du logement étant conformée en vue du contact avec au moins la portion centrale de la face principale (22) de l'insert de coupe tandis que, perpendiculairement à cette face de butée principale, il est prévu deux autres faces de butée, disposées angulairement l'une à l'autre, qui forment entre elles un angle de plus de 45° et de moins de 135° et qui servent de butée aux deux faces de positionnement (3) de l'insert de coupe qui forment entre elles au moins une face de coupe qui est reçue dans une rainure de dégagement entre les faces de butée s'étendant obliquement.

15. Outil de coupe selon la revendication 14, **caractérisé en ce qu'**il s'agit du porte-insert de coupe d'un outil de tournage.

16. Outil de coupe selon la revendication 14, **caractérisé en ce qu'**il est conformé en outil de fraisage rotatif sensiblement cylindrique, les inserts de coupe selon l'une des revendications 1 à 14 pouvant être montés tangentiellement sur la surface périphérique dudit outil de fraisage.
